Europäisches Patentamt

European Patent Office

Office européen des brevets

(19)

(11) **EP 1 286 185 A1**

(12) **EUROPEAN PATENT APPLICATION**

(43) Date of publication:
**26.02.2003 Bulletin 2003/09**

(51) Int Cl.⁷: **G02B 1/11**, C03C 17/34, G02B 27/01

(21) Application number: **02255477.8**

(22) Date of filing: **06.08.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **06.08.2001 JP 2001238093**
**19.02.2002 JP 2002041951**

(71) Applicant: **Nippon Sheet Glass Co., Ltd.**
**Osaka-shi, Osaka 541-8559 (JP)**

(72) Inventors:
• **Muromachi, Takashi,**
**Nippon Sheet Glass Co., Ltd.**
**Osaka-shi, Osaka 541-8559 (JP)**
• **Okamoto, Hideki,**
**c/o Nippon Sheet Glass Co., Ltd.**
**Osaka-shi, Osaka 541-8559 (JP)**

(74) Representative: **Jackson, Robert Patrick**
**Frank B. Dehn & Co.,**
**European Patent Attorneys,**
**179 Queen Victoria Street**
**London EC4V 4EL (GB)**

(54) **Windowpane for head-up display and method for manufacturing the same**

(57)    The present invention provides a windowpane for a vehicle that has a low-reflectance film in which the reflection of obliquely incident light can be suppressed and that is provided with a combiner for a head-up display combiner. The windowpane includes a glass plate and a low-reflectance film formed on a surface of the glass plate. The low-reflectance film includes a first layer on the glass plate and a second layer on the first layer, and the first layer has a refractive index of more than 1.80 to not more than 2.40 and a film thickness of 90 nm to 130 nm, and the second layer has a refractive index of 1.4 to 1.47 and a film thickness of 80 nm to 110 nm. The second layer is prevented from being formed in a predetermined region and thereby the first layer in the predetermined region is exposed to serve as a reflection enhancing film and to allow the first layer in said predetermined region to be used as the head-up display combiner.

FIG. 6

EP 1 286 185 A1

## EP 1 286 185 A1

**Description**

The present invention relates to a windowpane for a vehicle having a combiner for a head-up display (hereinafter referred to simply as HUD). Particularly, the present invention relates to a windowpane that is used for a windshield glass of an automobile and is provided with a low-reflectance film.

JP-A-6(1994)-305775 discloses a vehicle windowpane characterized in that a low-reflectance thin film is formed on the surface of a glass substrate and includes a plurality of thin films, and a thin film as the first layer that is in direct contact with the glass surface is allowed to be exposed at least in its predetermined region, and the thin film formed in the predetermined region has a higher refractive index than a relatively low refractive index of a thin film as the outermost layer. In addition, JP-A-6(1994)-305775 describes that thin films with different refractive indices are formed and stacked in two or three layers to form the low-reflectance thin film and the vehicle window glass with the above-mentioned structure can be used as a combiner glass plate for a HUD.

JP-A-6(1994)-340450 discloses a vehicle windowpane characterized in that a low-reflectance thin film is formed on the surface of a glass substrate and includes a plurality of thin films, and a thin film as the first layer that is in direct contact with the glass surface is allowed to be exposed at least in its predetermined region, and the thin film formed in the predetermined region has a higher refractive index than a relatively low refractive index of a thin film as the outermost layer. The whole or a part of the predetermined region is coated with a thin film of at least one layer stacked thereon. In addition, it is described that the predetermined region coated with at least a single layer film stacked on the low-reflectance thin film is formed of a wavelength-selective reflective film, and in the predetermined region at least in which the thin film as the first layer of the low-reflectance thin film that is in direct contact with the glass surface is allowed to be exposed is formed of a wavelength-nonselective reflective film.

Moreover, US 5,496,621, based on the patent applications published as the above-mentioned JP-A-6(1994)-305775 and JP-A-6(1994)-340450, includes numerical limitations such as a refractive index of 1.80 to 2.10 and a film thickness of 70 to 230 nm as to the first layer, a refractive index of 1.40 to 1.50 and a film thickness of 110 to 130 nm as to the second layer, and the like.

JP-Z-2500821 discloses a transparent reflection enhancing film as a HUD combiner that is made of metal oxide with a refractive index of 1.8 to 2.3 to have an optical film thickness of 400 to 1500 Å (40 to 150 nm).

In JP-A-6(1994)-305775, with respect to the low-reflectance film having a two-layer structure, the only numerical values described as examples include a refractive index of 1.8 to 2.1 and a film thickness of 700 to 2300 Å (70 to 230 nm) as to the first layer and a refractive index $n_2$ of 1.4 to 1.5 and a film thickness $d_2$ of 1100 to 1300 Å (110 to 130 nm) as to the second layer.

Similarly in JP-A-6(1994)-340450, with respect to the low-reflectance film having a two-layer structure, only numerical values in ranges similar to those in JP-A-6(1994)-305775 are given as examples.

In JP-A-6(1994)-305775 and JP-A-6(1994)-340450 above, it is necessary to form the low-reflectance film on only one surface of the glass plate and therefore only one surface of the glass plate is required to be covered overall with a masking tape.

In addition, as the method for allowing the thin film as the first layer to be exposed at least in its predetermined region, a peeling process is needed as follows: first, a low-reflectance film is formed by a dip method, and an alkoxide-decomposing paste is screen-printed in an unnecessary region of the second layer and then is baked. Afterward, the alkoxide-decomposing paste that sticks to the region is removed with sodium hydroxide and sulfuric acid.

In the peeling process, it is difficult to remove the second layer alone completely. Even if it was removed completely, a number of steps are required, resulting in a cost increase.

The present invention is intended to provide a windowpane for a vehicle, provided with a HUD combiner. The windowpane includes a glass plate and a low-reflectance film formed on a surface of the glass plate. The low-reflectance film includes a first layer on the glass plate and a second layer on the first layer, and the first layer has a refractive index of more than 1.80 and not more than 2.40, preferably not more than 2.20 and a film thickness of 90 nm to 130 nm, and the second layer has a refractive index of 1.4 to 1.47 and a film thickness of 80 nm to 110 nm. The second layer is prevented from being formed in a predetermined region and thereby the first layer in said predetermined region is exposed to serve as a reflection enhancing film and to allow the first layer in said predetermined region to be used as the head-up display combiner. Here, the film thickness denotes a physical film thickness, not an optical film thickness.

The present invention also provides a method that can be suitable for manufacturing the windowpane for a vehicle. The method includes a step of coating a first sol-gel solution for the first layer onto the glass plate, and a step of coating a second sol-gel solution for the second layer onto the first layer. The second sol-gel solution is applied by flexography using a flexographic plate that has a recessed portion, whereby the second layer is prevented from being formed in a predetermined region that corresponds to the recessed portion. Thus, the first layer in the predetermined region is exposed to serve as a reflection enhancing film and to allow the first layer in the predetermined region to be used as the head-up display combiner.

The low-reflectance film can suppress the reflection of obliquely incident light and provides a HUD combiner.

FIG. 1 is a plan view of an embodiment of a windowpane according to the present invention.

FIG. 2 is a sectional view for explaining flexography.

FIGs. 3A and 3B are drawings for explaining shapes of flexographic plates that can be used for the first and second layers of the present invention, respectively.

FIG. 4 is a sectional view of an example of a glass plate for a windowpane according to the present invention.

FIG. 5 is a drawing for explaining a modified example including gradation dots formed around the combiner part.

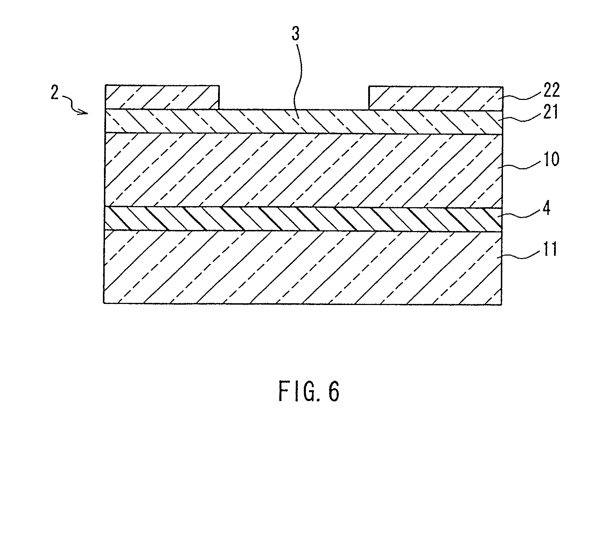

FIG. 6 is a sectional view of an example of a glass plate for a windowpane according to the present invention.

In the present invention, with respect to light incident at an angle of 60°, the windowpane preferably has a visible light reflectance of 12% or less at the surface where the low-reflectance film is formed and a visible light reflectance of at least 15% in the predetermined region (combiner part).

The glass plate can be a laminated glass. The laminated glass plate preferably includes a green glass plate, a clear glass plate and an intermediate film that bond the glass plates together. Here, a green glass plate denotes a glass plate composed of a glass composition that includes at least 0.5wt%, preferably at least 0.52wt% of iron oxide based on $Fe_2O_3$. A clear glass denotes a glass plate composed of a glass composition that includes less than 0.2wt% of iron oxide based on $Fe_2O_3$.

The first layer and the second layer may be formed of metal oxide. The first layer preferably includes $TiO_2$ and/or $SiO_2$ and the second layer preferably includes $SiO_2$ as a main component. Here, a main component denotes a component of 50wt% or more.

When the first and second layers are formed by a sol-gel method, the first layer preferably has a mole ratio of $TiO_2 : SiO_2$ in a range of 46 : 54 to 100 : 0, and the second layer preferably is made of $SiO_2$. When the first and second layers are formed by sputtering, the first layer preferably has a mole ratio of $TiO_2 : SiO_2$ is in a range of 36 : 64 to 100 : 0, and the second layer preferably is made of $SiO_2$.

The metal oxide for the reflection enhancing film is not particularly limited as long as it has a refractive index within the above-mentioned range. The metal oxide should be transparent and may be made of not only a single component but also a mixture of at least two components.

Generally, low-reflectance films formed on transparent substrates are classified into some groups according to the number of layers included therein. They may be classified into a single-layer structure, a two-layer structure, a three-layer structure, and a multilayer (four or more layer) structure.

First of all, as a low-reflectance film with the single-layer structure, for example, on a glass plate as a transparent substrate is formed a film with a lower refractive index than that of the glass plate. Examples of the practical material with a low refractive index include $MgF_2$ and $SiO_2$.

In such a single-layer structure, however, an antireflection effect might not be obtained to a sufficient degree. Hence, a low-reflectance film with the two-layer structure is used, which includes a combination of two layers having higher and lower refractive indices than that of the glass plate, respectively.

When the antireflection effect cannot be obtained to a sufficient degree even with the two-layer structure employed, a low-reflectance film may be used that has a three-layer structure including layers with low, middle, and high refractive indices, respectively, or has a structure including four layers or more.

In any case, a layer with a lower refractive index than that of the transparent substrate is formed as the top layer of the low-reflectance film. For instance, only $MgF_2$ and $SiO_2$ described above are practical as the material with a lower refractive index than that of the glass plate. However, the use of $MgF_2$ results in the formation of a layer with a low refractive index having poor durability and weather resistance and it cannot endure heating in a glass plate-bending step. Hence, only $SiO_2$ is applicable to such a use.

Here, when consideration is given to the case where a low-reflectance film is applied to a bent glass plate for a vehicle, it is preferable in terms of thickness uniformity or the like that a low-reflectance film be formed on a glass plate that is in a flat state and then the glass plate be heated to be bent. Thus, the method of the present invention may further include a step of bending the glass plate with the low-reflectance film and another glass plate, and a step of laminating these glass plates with an intermediate film.

One preferable method for coating a wide area with $SiO_2$ at low cost is roller coating. In this case, preferably, a $SiO_2$ layer is formed by a sol-gel process. In addition, the $SiO_2$ layer may be formed to be in a porous state to allow an apparent refractive index to be decreased. Furthermore, inorganic minute particles with a lower refractive index may be mixed into a $SiO_2$ layer to decrease its refractive index. The decrease in refractive index of the second layer results in an increase in the antireflection effect. In this case, the second layer may contain $B_2O_3$, $Al_2O_3$ or other components in addition to $SiO_2$ as a main component.

With a low-reflectance film with the two-layer structure having a considerable antireflection effect that is a relatively simple film structure, the refractive index of a material with a high refractive index $n_1$ that can be combined with $SiO_2$ having a refractive index $n_2$ of 1.46 as a material with a low refractive index is calculated. An example of the relationship between $n_1$ and $n_2$ is expressed by the following formula:

$$n_1 = [(n_2)^2 \times n_g/n_0]^{1/2},$$

wherein $n_g$ denotes a refractive index of glass (=1.52), and $n_3$ indicates a refractive index of the air (= 1.0). The refractive index $n_1$ is determined from this formula to be 1.80.

There is no suitable material having a refractive index $n_1$ around 1.80 among single materials that can be used to form a film by the sol-gel process. Hence, it is considered to use a layer made of a mixture of $TiO_2$ with a refractive index $n$ of 2.2 and $SiO_2$ with a refractive index $n$ of 1.46, both of which can be used to form a film by the sol-gel process. Furthermore, $ZrO_2$ with a refractive index $n$ of 1.95, $CeO_2$, or $Bi_2O_3$ may be added to allow a layer with a high refractive index to be formed.

The low-reflectance film composed of two layers that is used in the present invention is designed so as to have a function of reducing the reflection of obliquely incident light. Moreover, the refractive index and film thickness of the first layer of the low-reflectance film composed of two layers are specified so that the first layer also can be utilized as a HUD combiner.

The refractive index and film thickness of the second layer also are designed with consideration given to the refractive index and film thickness of the first layer so that the second layer also functions as a low-reflectance film. It also is taken into consideration that the low-reflectance film as a whole is allowed to have a neutral color tone.

In the windowpane, the visible light reflectance at the film surface of the low-reflectance film can be set to be 12% or lower with respect to light incident at an angle of 60°. Such a reflectance permits a reflection reducing effect to be obtained when the windowpane is used as a windshield.

In the windowpane, the visible light reflectance at the film surface of the combiner part can be set to be at least 15%. Such a reflectance allows the part to function as a combiner.

With respect to the above mentioned low-reflectance film that reduces the reflection of obliquely incident light, the present inventors disclose, as the invention described in claim 1 in JP-A-2000-256042, a low-reflectance glass article for an automobile that is formed by coating and stacking of a thin film as the first layer viewed from a glass surface side with a refractive index (n1) of 1.65 to 2.20 and a film thickness of 110 to 150 nm on at least one surface of a transparent glass substrate. A thin film as the second layer contains silica as a main component and has a refractive index (n2) of 1.37 to 1.49 and a film thickness of 81 to 100 nm is formed on the thin film as the first layer, and that allows light reflected from the low-reflectance glass article when visible light is incident on its film surface side at angles of 12 and 60 degrees to have an excitation purity of 22% or lower and 10% or lower, respectively.

Furthermore, as to a glass plate provided with a function of reducing the reflection of obliquely incident light, the following is disclosed in JP-A-8(1996)-152501 for the purpose of obtaining a glass plate that is friendly to the environment and human beings. The intention is to diminish a phenomenon in which a dashboard or its surroundings are mirrored therein and a sense of glare for human and the environment, improve viewability therethrough for a driver, and improve safety through prevention of misconception, eye fatigue, or the like, using a thin film that reduces reflection, causes less coloration of interference colors, and has high durability when using the glass plate as a windshield.

That is, a reflection reducing glass plate for a vehicle is formed of a thin film with a refractive index of 1.7 to 1.8 and a film thickness of 90 to 110 nm as the first layer viewed from the glass surface side and a thin film with a refractive index of 1.4 to 1.5 and a film thickness of 105 to 130 nm as the second layer that are stacked by coating on at least one surface of a transparent glass substrate. In the reflection reducing glass plate for a vehicle, the reflectance of the surface of the film thus stacked as the second layer with respect to light that is incident at an angle of 50 to 70° to a vertical line of the surface to be reflected is allowed to decrease by 4.5 to 6.5% as compared to the reflectance of the glass surface, and the excitation purity of the reflected light with respect to the above-mentioned light that is incident at an angle of 50 to 70° is set to be 18% or lower.

Preparation of Coating Solution

Initially, 500 g of ethyl silicate 40 (COLCOAT Co., LTD) was hydrolyzed with 410 g of ethylcellosolve and 90 g of 0.1 mol/L hydrochloric acid, which further was stirred. Thus, a solution A was prepared.

Next, 65.5 g of titanium tetraisopropoxide and 64.1 g of acetylacetone were mixed together and thereby a solution B was prepared.

These solutions A and B were mixed together at a ratio of 1 : 2.4, which then was diluted suitably with an ethylcellosolve solvent. Thus, a coating solution C was prepared.

Furthermore, the solution A was diluted suitably with an ethylcellosolve solvent and thereby a solution D was prepared.

When the ratio of $TiO_2$ : $SiO_2$ is controlled so as to be in the range of 40 :60 to 100 : 0 in terms of a mole ratio, the refractive index $n_1$ of a layer made of a mixture of $TiO_2$ and $SiO_2$ can be set in the range of more than 1.80 and not more than 2.20.

In the sol-gel process, $TiO_2$ and $SiO_2$ are used suitably since their respective alkoxides as starting materials can be mixed with each other at various mixture ratios and the refractive index of a mixed film thus obtained can be controlled freely. This mixed film is excellent in durability and thus is preferable. In addition, the alkoxides as starting materials of $TiO_2$ and $SiO_2$ both are used suitably since they are stable, have high film formability, and allow a homogeneous film to be obtained easily. Furthermore, $ZrO_2$ ($n$ = 1.95) can be used to form a film by the sol-gel process and may be mixed suitably with $TiO_2$ and $SiO_2$ as required.

Examples of titanium alkoxide include titanium methoxide, titanium ethoxide, titanium n-propoxide, titanium n-butoxide, titanium isobutoxide, titanium methoxypropoxide, titanium stearyloxide, and titanium 2-ethylhexyoxide. Examples of titanium alkoxide halide such as titanium alkoxide chloride include titanium chloride triisopropoxide and titanium dichloride diethoxide.

Examples of silicon alkoxide include silicon methoxide, silicon ethoxide, and oligomers thereof.

When using a vapor deposition method such as sputtering, materials may be used including $ThO_2$ ($n$ = 1.8), $SnO_2$ ($n$ = 1.9), SiO ($n$ = 1.7 to 2.0), $ZrO_2$ ($n$ = 2.1), $CeO_2$ ($n$ = 2.2), $TiO_2$ ($n$ = 2.4), and the like. When a film is formed using $TiO_2$ by the sol-gel process described above, only a film with a refractive index $n$ of about 2.2 is obtained. When a film is formed using $TiO_2$ by this sputtering technique, however, a film with a refractive index $n$ of about 2.4 is obtained.

When the refractive index of the reflection enhancing film is below 1.7, a reflectance required for a combiner cannot be obtained. In addition, it is industrially difficult to obtain a reflection enhancing film with a refractive index exceeding 2.4.

Example 1

Soda-lime silicate glass plates of a clear glass plate and a green glass plate that include about 0.53wt% and about 0.12wt% of iron oxide (counted as $Fe_2O_3$), respectively, were prepared by a float glass process. These glass plates were cut into a predetermined size and washed. The clear glass plate was coated with the above-mentioned coating solution C.

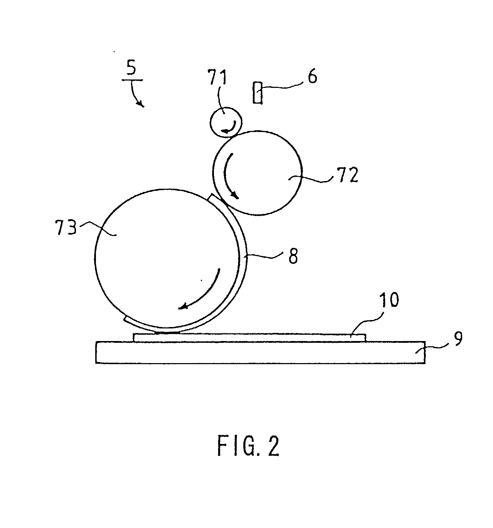

FIG. 2 shows a flexographic printer 5 used for the coating. A coating solution is supplied from a dispenser 6 onto a glass plate 10 on a carrier table 9 via an anilox roller 72 and a flexographic plate 8 on a printer roller 73. A doctor roll 71 prevents the coating solution from being excessively supplied.

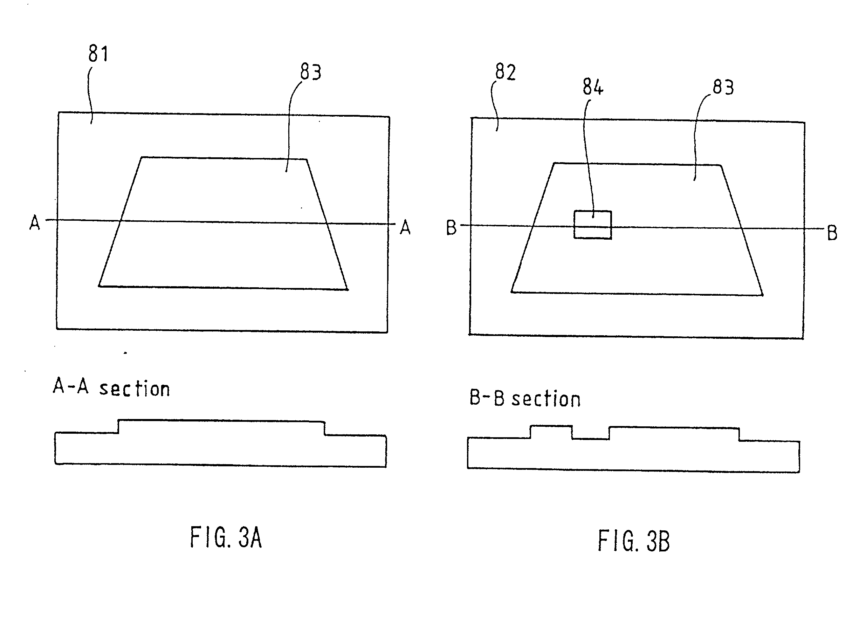

FIG. 3A schematically shows a flexographic plate 81 used here that has a printing face 83. This glass plate coated with the coating solution C was dried at about 300°C. Thus, a first sol-gel solution was applied.

Next, the whole surface of this glass plate also was coated with the coating solution D by flexography. In this case, a region 84 in a printing face 83 of a flexographic plate 82 corresponding to a region of the glass plate where a combiner was to be formed was recessed so that the coating solution D was not applied thereto. The flexographic plate 82 used here is shown in FIG. 3B schematically. After coating, the glass plate was dried at about 300°C. Thus, the second sol-gel solution was applied. As a result, the whole principal surface of the glass plate was coated with the coating solution D through an printing face 83, except the region to be a combiner.

This glass plate was baked at 620 to 630°C and then was subjected to bending formation to be formed as a glass plate for an automobile. The bending formation was carried out as follows: the above-mentioned glass plate and the green glass plate processed to have a similar shape thereto were stacked on top of each other, then were placed on a sagging die, and were heated in a furnace to be bent by their own weight.

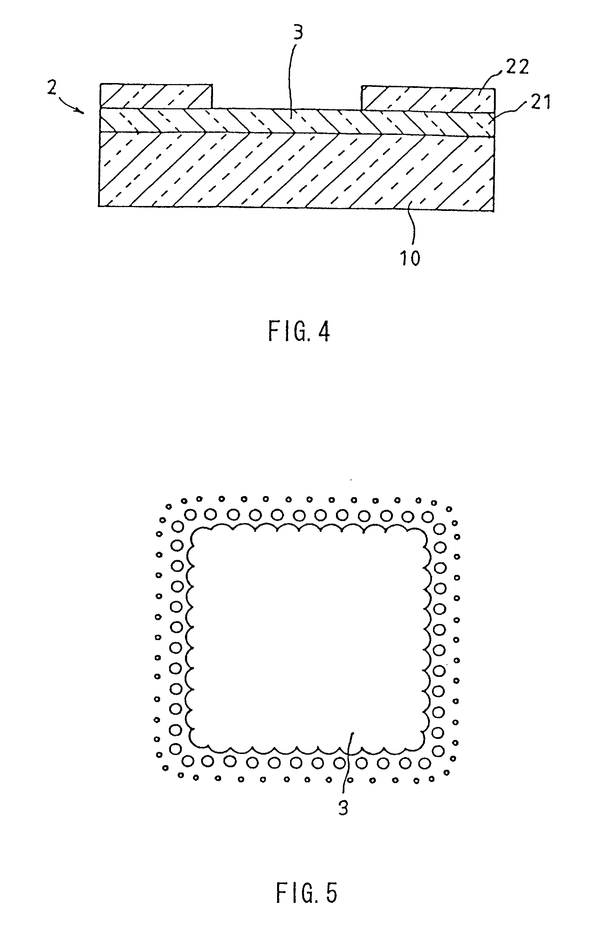

Thus, a glass plate was obtained that was provided with a low-reflectance film having a two-layer structure formed of the first layer with a refractive index $n_1$ of about 1.9 and a film thickness $d_1$ of about 110 nm and a second layer with a refractive index $n_2$ of about 1.44 and a film thickness $d_2$ of about 100 nm. The HUD combiner part was not coated with the second layer and thus was formed of a film composed of the first layer alone. FIG. 4 shows a schematic view of the cross-section of this combiner part 3 of a surface of the glass plate 10. The boundary portion of the combiner part 3 at the surface of the low-reflectance film 21, 22 was formed in a predetermined position accurately and had an excellent appearance.

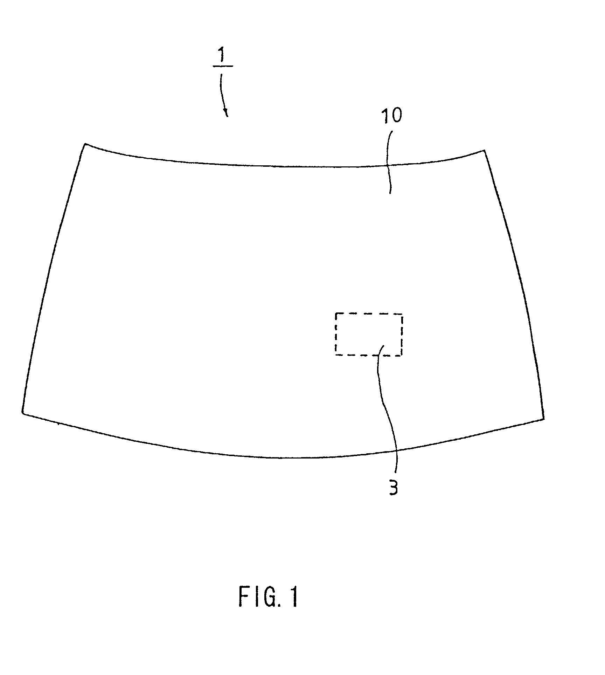

Furthermore, using a PVB film as an interlayer, an ordinal lamination process was carried out with the side of the low-reflectance film 21, 22 of the glass plate 10 placed to be used inside a vehicle and the above-mentioned another glass plate 11 placed to be used outside the vehicle. Thus, a HUD combiner-provided laminated was obtained (see FIG. 1). The optical performance of the laminated glass thus obtained is indicated in Table 1. The transmissivity and the reflectance indicated in Table 1 were measured with light incident at an angle of 0° and with light incident at an angle of 60°, respectively. With respect to the combiner part, the reflectance shown in Table 1 is of the film surface alone.

Table 1

| | Visible Light Transmissivity (%) | Visible Light Reflectance (%) |
|---|---|---|
| Low-Reflectance Film | 86.6 | 10.4 |
| Combiner Part | 78.4 | 18.9 |

As is apparent from Table 1, the combiner part has an increased reflectance and thereby it was proved that the first layer serves as a reflection enhancing film. Consequently, it is possible to make this part function as a combiner.

Thus, the HUD combiner-provided low-reflectance film can be obtained by the low-reflectance film formation step alone. This was achieved by the process in which the two layers of the low-reflectance film were formed by flexography and the combiner part was prevented from being coated during the coating step for forming the second layer.

Example 2

The above-mentioned coating solutions A and B were mixed together at a ratio of 1 : 10.8, which then was diluted suitably with an ethylcellosolve solvent. Thus, a coating solution C2 was prepared. In Example 2, a laminated glass with a low-reflectance film having a two-layer structure was obtained by the same manner as in Example 1 except that the coating solution C2 was used instead of the coating solution C. The low-reflectance film included a first layer with a refractive index $n_1$ of about 2.1 and a film thickness $d_1$ of about 110 nm and a second layer with a refractive index $n_2$ of about 1.44 and a film thickness $d_2$ of about 100 nm. The result is shown in Table 2.

Table 2

| | Visible Light Transmissivity (%) | Visible Light Reflectance (%) |
|---|---|---|
| Low-Reflectance Film | 85.7 | 10.7 |
| Combiner Part | 78.4 | 20.3 |

Comparative Example 1

In Comparative Example 1, the above-mentioned solutions A and B were mixed together at a ratio of 1 : 4.8, which then was diluted suitably with an ethylcellosolve solvent. Thus, a coating solution c was prepared.

Initially, a first layer was formed with the coating solution c, and then a second layer was formed with the coating solution D. In this case, the first layer had a refractive index $n_1$ of about 2.0 and a film thickness $d_1$ of about 50 nm and the second layer had a refractive index $n_2$ of about 1.44 and a film thickness $d_2$ of about 90 nm. Except for this, the same steps as those in the above-mentioned examples were carried out to produce a HUD combiner-provided laminated glass for a vehicle. The optical performance of the laminated glass plate thus obtained is shown in Table 3. The measurement conditions are the same as those in the above-mentioned examples.

Table 3

| | Visible Light Transmissivity (%) | Visible Light Reflectance (%) |
|---|---|---|
| Low-Reflectance Film | 85.3 | 17.0 |
| Combiner Part | 73.2 | 20.7 |

Comparative Example 2

In Comparative Example 2, a laminated glass was obtained by the same manner as in Comparative Example 1 except that the film thickness of the first layer was set to be 140 nm. The result is shown in Table 4.

Table 4

| | Visible Light Transmissivity (%) | Visible Light Reflectance (%) |
|---|---|---|
| Low-Reflectance Film | 86.3 | 11.0 |
| Combiner Part | 83.8 | 12.2 |

Modified Example

FIG. 5 shows an example with gradation dots formed around a combiner to make its presence inconspicuous.

As described above, in a HUD combiner-provided windowpane for a vehicle according to the present invention, the refractive index $n_1$ and film thickness $d_1$ of the first layer of the low-reflectance film are set to be in the range of $1.80 < n \leq 2.40$ and in the range of 90 to 130 nm, respectively. Hence, the region where the second layer is not formed has an increased reflectance and thus is allowed to function as a combiner. Furthermore, the low-reflectance film can be obtained without increasing the number of steps and thus the HUD combiner-provided windowpane can be provided at low cost.

**Claims**

1.  A windowpane for a vehicle, provided with a head-up display combiner, comprising:

    a glass plate; and
    a low-reflectance film formed on a surface of the glass plate,

    wherein the low-reflectance film comprises a first layer on the glass plate and a second layer on the first layer,
    wherein the first layer has a refractive index of more than 1.80 to not more than 2.40 and a film thickness of 90 nm to 130 nm, and the second layer has a refractive index of 1.4 to 1.47 and a film thickness of 80 nm to 110 nm, and
    wherein the second layer is prevented from being formed in a predetermined region and thereby the first layer in said predetermined region is exposed to serve as a reflection enhancing film and to allow the first layer in said predetermined region to be used as the head-up display combiner.

2.  The windowpane as claimed in claim 1, wherein with respect to light incident at an angle of 60°, the windowpane has a visible light reflectance of 12% or lower at the surface where the low-reflectance film is formed and a visible light reflectance of at least 15% in said predetermined region.

3.  The windowpane as claimed in claim 1 or claim 2, wherein the glass plate is a laminated glass.

4.  The windowpane as claimed in claim 3, wherein the laminated glass comprises a green glass plate, a clear glass plate and an intermediate film that bonds the glass plates together..

5.  The windowpane as claimed in any one of claims 1 to 4, wherein the first layer comprises $TiO_2$ and/or $SiO_2$ and the second layer comprises $SiO_2$ as a main component.

6.  The windowpane as claimed in claim 5, wherein the first layer is formed by a sol-gel process, a mole ratio of $TiO_2$ : $SiO_2$ is in a range of 46 : 54 to 100 : 0, and the second layer is made of $SiO_2$.

7.  The windowpane as claimed in claim 5, wherein the first layer is formed by sputtering, a mole ratio of $TiO_2$ : $SiO_2$ is in a range of 36 : 64 to 100 : 0, and the second layer is made of $SiO_2$.

8.  A method of manufacturing a windowpane for a vehicle, provided with a head-up display combiner, the windowpane comprising a glass plate and a low-reflectance film formed on a surface of the glass plate, wherein the low-reflectance film comprises a first layer on the glass plate and a second layer on the first layer, and wherein the first layer has a refractive index of more than 1.80 and not more than 2.20 and a film thickness of 90 nm to 130 nm, and the second layer has a refractive index of 1.4 to 1.47 and a film thickness of 80 nm to 110 nm, the method comprising:

    coating a first sol-gel solution for the first layer onto the glass plate, and
    coating a second sol-gel solution for the second layer onto the first layer,

    wherein the second sol-gel solution is applied by flexography using a flexographic plate that has a recessed portion,
    whereby the second layer is prevented from being formed in a predetermined region that corresponds to the recessed portion and thereby the first layer in said predetermined region is exposed to serve as an reflection enhancing film and to allow the first layer in said predetermined region to be used as the head-up display combiner.

9. The method according to claim 8, wherein the first layer comprises $TiO_2$ and/or $SiO_2$ and the second layer comprises $SiO_2$ as a main component.

10. The method according to claim 9, wherein the first layer is formed by a sol-gel process, a mole ratio of $TiO_2 : SiO_2$ is in a range of 46 : 54 to 100 : 0, and the second layer is made of $SiO_2$.

FIG. 1

FIG. 2

81  83

82  84  83

A—A section

B—B section

FIG. 3A

FIG. 3B

FIG. 4

FIG. 5

FIG. 6

**European Patent**

**Office**

## EUROPEAN SEARCH REPORT

Application Number

EP 02 25 5477

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | US 5 496 621 A (TAKAMATSU ATSUSHI ET AL) 5 March 1996 (1996-03-05) | 1-6 | G02B1/11 C03C17/34 G02B27/01 |
| Y | * abstract * * column 4, line 56 - column 5, line 61 * * column 6, line 38 - line 45 * * column 7, line 30 - column 8, line 41 * * figure 1 * | 7-10 | |
| Y | US 5 189 952 A (OHMURA SHINYA ET AL) 2 March 1993 (1993-03-02) * abstract * * column 2, line 35 - column 3, line 21 * * figure 3 * | 8-10 | |
| Y | EP 0 448 522 A (SIV SOC ITALIANA VETRO) 25 September 1991 (1991-09-25) * abstract * * page 3, line 43 - line 52 * | 7 | |

TECHNICAL FIELDS
SEARCHED (Int.Cl.7)

G02B
C03C

The present search report has been drawn up for all claims

| Place of search | Date of completion of the search | Examiner |
|---|---|---|
| MUNICH | 28 October 2002 | Schenke, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 286 185 A1**

## ANNEX TO THE EUROPEAN SEARCH REPORT
## ON EUROPEAN PATENT APPLICATION NO.

EP 02 25 5477

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2002

| Patent document cited in search report | | Publication date | Patent family member(s) | | Publication date |
|---|---|---|---|---|---|
| US 5496621 | A | 05-03-1996 | JP | 3266362 B2 | 18-03-2002 |
| | | | JP | 6305775 A | 01-11-1994 |
| | | | JP | 6340450 A | 13-12-1994 |
| | | | DE | 69405902 D1 | 06-11-1997 |
| | | | DE | 69405902 T2 | 29-01-1998 |
| | | | EP | 0620469 A1 | 19-10-1994 |
| US 5189952 | A | 02-03-1993 | JP | 4219347 A | 10-08-1992 |
| | | | JP | 4219348 A | 10-08-1992 |
| | | | US | 5137560 A | 11-08-1992 |
| EP 0448522 | A | 25-09-1991 | IT | 1240796 B | 17-12-1993 |
| | | | CA | 2038125 A1 | 13-09-1991 |
| | | | EP | 0448522 A2 | 25-09-1991 |
| | | | US | 5143796 A | 01-09-1992 |

EPO FORM P0459

For more details about this annex : see Official Journal of the European Patent Office, No. 12/82